# EUROPÄISCHE PATENTSCHRIFT

(11) **EP 2 785 524 B1**
(45) Veröffentlichungstag und Bekanntmachung des Hinweises auf die Patenterteilung: **18.03.2020**
(21) Anmeldenummer: 12821239.6
(22) Anmeldetag: 28.11.2012
(51) Int. Cl.: B32B 5/18, B32B 15/04, E04C 2/00, E04F 13/00, B32B 5/16

(54) **STÜTZKERNVERBUNDPLATTE MIT EINEM STÜTZKERN AUS BLÄHGLAS**
SUPPORTING CORE COMPOSITE PANEL WITH A SUPPORTING CORE MADE OF FOAM GLASS
PLAQUE COMPOSITE À NOYAU DE SUPPORT, DOTÉE D'UN NOYAU DE SUPPORT EN VERRE EXPANSÉ

(30) Priorität: 02.12.2011 DE 102011119976
(43) Veröffentlichungstag der Anmeldung: 08.10.2014
(73) Patentinhaber: Elbe Flugzeugwerke GmbH, 01109 Dresden (DE)
(72) Erfinder: BUBE, Robert, 01159 Dresden (DE); LEIBNER, Martin, 01665 Klipphausen OT Naustadt (DE); SCHERF, Jeanette, 09599 Freiberg (DE); KÄSTNER, Lars, 01099 Dresden (DE)
(74) Vertreter: LKGLOBAL Lorenz & Kopf PartG mbB Patentanwälte
(86) Internationale Anmeldenummer: PCT/DE2012/001143
(87) Internationale Veröffentlichungsnummer: WO 2013/079054

(56) Entgegenhaltungen:
- DE-A1- 4 317 315
- DE-A1-102008 048 541
- DE-U1-202007 007 930
- US-A1- 2003 145 534
- US-A1- 2005 019 542

## Beschreibung

Die Erfindung betrifft den Stützkernverbundbau bzw. die so genannte Sandwichbauweise nämlich eine Stützkernverbundplatte bzw. ein Schicht-Verbundelement bzw. eine Sandwichplatte für Innenausbauten, insbesondere für Wasserfahrzeuge, mit einem Stützkern aus Blähglas und mit zumindest einer Deckschicht, die den Stützkern auf einer Seite weitgehend vollflächig bedeckt. Derartige Platten werden im Fahrzeugbau und dort im Innenausbau als Wand-, Decken- oder Fußbodenplatten von Passagierkabinen oder als Einhausung von Betriebsräumen eingesetzt. Insbesondere aus Gründen der Kraftstoffersparnis sind auch derartige Stützkernverbundplatten möglichst leicht bzw. mit möglichst geringer Masse auszustatten, sollen aber dennoch eine hohe Biegesteifigkeit und Plattenfestigkeit aufweisen. Außerdem werden dort hohe Anforderungen an das Brandschutz- sowie das Lärmdämmniveau gestellt.

In der DE 10 2008 048 541 ist ein Schicht-Verbundelement beschrieben mit einer Füllstoffschicht und mindestens einer daran angrenzenden Materialschicht aus einem Gemisch aus Glasfasern und einem 2-Komponenten-Binder. Um ein gutes Wärmedämmverhalten zu erzielen, wird als Füllstoffschicht u. a. Blähglas, Blähton, geblähtes Perlit und Vergleichbares empfohlen.

Die DE 20 2007 007 930 U1 beschreibt eine Leichtbauplatte im Wesentlichen aus einer relativ dünnen, selbsttragenden Verkleidungsschicht und einer Versteifungsschicht aus verfestigtem Blähglasgranulat, Keramikschaum oder einem ähnlich steifen Material, wobei die Verkleidungsschicht über ihre Fläche mit der Versteifungsschicht verbunden ist. Die Versteifungsschicht soll eine ausreichende Steifigkeit gewährleisten, damit bei ihrer Verwendung als Deckenelement ein Durchhängen der Leichtbauplatte weitgehend vermieden wird. Außerdem dient die Versteifungsschicht in Verbindung mit der Verkleidungsschicht zur Schallabsorption, Schalldämmung und für Brandschutzzwecke.

Die US 2005/0019542 A1 und US 2003/0145534 A1 beschreiben Schaumglasplatten hoher Dichte mit einer kleinen Porengröße, die fest sind und sowohl an Innenals auch an Außenfassaden von Gebäuden verwendet werden sollen. Die Schaumglasplatten sollen ermöglichen, dass solche Gebäude eine größere Explosionsbeständigkeit aufweisen.

Die US 2003/0145534 A1 beschreibt ferner einen Verbund von Paneelen und ein Blasenergie absorbierendes Strukturlaminat sowie ein Verfahren zu deren Herstellung durch Verbinden von Schichten aus geschäumtem Glas oder geschäumten kieselsäurehaltigen Materialien mit strukturellen anorganischen zementartigen Materialien, polymeren Materialien, Metallen und Fasern, die in Laminaten verwendet werden können.

Aufgabe der Erfindung ist es, eine Stützkernverbundplatte für Innenausbauten im Fahrzeugbereich anzugeben, die den dortigen Lärmschutz- und Brandschutzanforderungen genügt, eine ausreichende Belastbarkeit aufweist und dennoch über eine geringe Masse verfügt.

Diese Aufgabe wird durch eine Stützkernverbundplatte für Innenausbauten gemäß Anspruch 1 mit einem Stützkern aus Blähglas, mit zumindest einer Deckschicht, die den Stützkern auf einer Seite weitgehend vollflächig bedeckt und mit einem elastischen bzw. duktilen Klebstoff gelöst, der zumindest eine der Deckschichten auf dem Stützkern befestigt. Der Stützkern aus Blähglas besitzt eine geringe Dichte und ist gegenüber beispielsweise Mineralwolle wesentlich steifer, insbesondere wenn er als eine gesinterte Platte aus Blähglasgranulat ausgebildet ist. Er ist jedoch sehr spröde und hat eine geringe Bruchdehnung, wodurch er nur sehr kleine Durchbiegungen und geringe punktuelle Belastungen ohne Zerstörung übernehmen kann.

Sowohl punktuelle Druckbelastungen als auch Biegebelastungen kann dagegen die Deckschicht aufnehmen, die mit dem Stützkern weitgehend vollflächig verbunden ist. Bei einer asymmetrischen oder einseitigen Belastung als Fußboden- oder Deckenplatte können eine einseitige Deckschicht und damit ein asymmetrischer Aufbau der Stützkernverbundplatte genügen. Eine einseitige Deckschicht weist vorzugsweise eine Profilierung oder Schichtung auf die seine Beigesteifigkeit erhöht, um Biegebelastungen der Stützkernverbundplatte übernehmen zu können. Alternativ zu einer einseitigen Deckschicht können auch zwei Deckschichten unterschiedlichen Materials eingesetzt werden, deren Material auf die ebenfalls unterschiedlichen Belastungen auf einer Oberseite einerseits und einer Unterseite andererseits einer Fußboden- oder Deckenplatte einwirken.

Die Deckschicht schützt den spröden Blähglasstützkern gegen Druck- und Schlagbelastungen, indem sie die Belastungen auf eine größere Fläche des Stützkerns verteilt. Umgekehrt stützt sich die Deckschicht an dem steifen Stützkern ab, so dass eine Ausbildung von Dellen und Beulen reduziert ist. Die Klebstoffschicht schließlich ist erfindungsgemäß elastisch bzw. zumindest duktil und ermöglicht damit ein elastisches bzw. duktiles Verhalten zwischen der Deckschicht einerseits und dem Stützkern andererseits. Unter Elastizität wird die Eigenschaft des Klebstoffs verstanden, unter Belastung seine Form zu verändern und bei Wegfall der Belastung weitgehend in seine ursprüngliche Form zurückzukehren. Unter Duktilität wird die Eigenschaft des Klebstoffs verstanden, sich unter Überbelastung zunächst stark plastisch zu verformen, bevor er versagt. Der erfindungsgemäße Klebstoff kann insbesondere in gewissem Rahmen Schubkräfte zwischen der Deckschicht und dem Stützkern übertragen ohne zu reißen oder abzuscheren und damit die Verbindung zwischen Deckschicht und Stützkern zu zerstören. Er baut damit auch Temperaturspannungen infolge ungleicher Temperaturausdehnungskoeffizienten der Deckschicht einerseits und des Stützkerns andererseits ab. Der Klebstoff vermag das spröde Verhalten des Stützkerns quasi auszugleichen. Der spröde Stützkern erhält zudem eine weiche Bettung auf der Deckschicht bzw. zwischen zwei Deckschichten, die zum einen zu einer Entkoppelung von Körperschall führt, so dass die Stützkernverbundplatte keine bzw. nur eine schlechte Körperschallbrücke darstellt. Zum anderen führt die weiche Bettung zu einer verbesserten Kraftverteilung von Belastungen, die über die Deckschicht auf die Stützkernverbundplatte einwirken, und zu einer verbesserten Übertragung dieser Belastungen in den Stützkern. Außerdem werden schlagartige Beanspruchungen der Stützkernverbundplatte bereits durch die Klebstoffschicht wirksam abgefedert. Je wirkungsvoller eine Belastung auf den Stützkern verteilt werden kann, umso höhere Belastungen kann er übernehmen. Da Blähglas hohe Druckkräfte übertragen kann, sofern sie nicht mit einer zu hohen Flächenpressung einhergehen, kann die erfinderische Stützkernverbundplatte deutlich höhere Belastungen aufnehmen als bekannte Verbundplatten.

Herkömmliche Klebstoffe zur Verbindung der Deckschicht und des Stützkerns sind gewöhnlich sehr hart bzw. steif. Erfindungsgemäß hat der Klebstoff eine Shore-(A)-Härte zwischen 30 bis 80, vorzugsweise zwischen 45 bis 70, und besonders bevorzugt zwischen 50 und 60. Der Klebstoff bietet damit eine hohe Elastizität, die einen geringfügigen Bewegungsspielraum in der Verbindungsfuge zwischen Deckschicht und Stützkern zulässt.

Die Erfindung wendet sich folglich davon ab, möglichst dünne und steife Klebstoffschichten anzubringen, die einen ebenso steifen Verbund zwischen den Deckschichten und dem Stützkern bedeuten. Es ist vielmehr das Verdienst der Erfindung erkannt zu haben, dass die hohe Sprödigkeit und sehr geringe Bruchdehnung des Stützkerns zwar eine geringe Belastbarkeit, insbesondere eine geringe Durchbiegung erwarten lässt, die Deckschichten mit ihren relativ hohen Festigkeiten und Steifigkeiten jedoch wesentlich größere Lasten und Durchbiegungen ertragen könnten. Sie verfolgt daher das Prinzip, die Deckschichten eben nicht steif und starr mit dem spröden Stützkern zu verbinden, sondern durch einen elastischen Klebstoff eine gewisse Bewegungsmöglichkeit in der Verbindungsfuge zwischen Deckschicht und Stützkern zu ermöglichen. Damit können die Deckschichten wesentlich höher belastet werden, bevor ein Versagen der Stützkernverbundblatte auftritt. Durch die bessere Ausnutzung der Festigkeiten der Deckschichten können sie wesentlich dünner und damit Gewicht sparend ausgeführt werden.

Wegen der hohen Steifigkeit des Stützkerns kann eine Dickenresonanz in einem mittleren bis oberen Frequenzbereich etwa zwischen 500 Hz und 4.000 Hz verhindert werden, wodurch die Schalldämmeigenschaften des erfindungsgemäßen Stützkerns aus Blähglas gegenüber einem weichen Stützkern wie Mineralwolle wesentlich besser sind. Bei gleichen Anforderungen an die Schalldämmung der Stützkernverbundplatte kann daher eine solche mit dem erfinderischen Stützkern wesentlich leichter sein.

Es sind zahlreiche Materialien bekannt, die sich als Deckschicht einer Stützkernverbundplatte eignen. Nach einer vorteilhaften Ausgestaltung der Erfindung verfügt sie über zumindest eine metallische Deckschicht. Sie lässt sich regelmäßig in geeigneten Dicken herstellen und ist auch bei relativ geringer Dicke sehr belastbar. Vorzugsweise ist die Deckschicht aus Aluminium oder aus seinen Legierungen, weil Aluminium ein gutes Verhältnis zwischen einer hohen Belastbarkeit einerseits und seinem geringen Gewicht andererseits bietet. Die Deckschicht kann daher aus Aluminiumblech bestehen. Zwar kann eine Deckschicht aus Aluminium aufgrund großer Hitzeentwicklung im Brandfall schmelzen. Dennoch schottet die erfinderische Stützkernverbundplatte den Brand weiter ab, weil der steife Stützkern auch hohen Temperaturbelastungen standhält. Sind besonders hohe Brandschutz- und/oder Festigkeitsanforderungen zu erfüllen, können auch Stähle bzw. Stahlblech als Deckschicht eingesetzt werden.

Nach einer vorteilhaften Ausgestaltung der Erfindung ist der Klebstoff ein Silikon bzw. ein Polyorganosiloxan. Dieses Material bietet die gewünschten Eigenschaften von Klebkraft bzw. Haftfestigkeit einerseits und Elastizität andererseits. Außerdem lässt sich Silikon in der gewünschten und notwendigen Art bis hin zum großtechnischen Einsatz verarbeiten. Er kann auf einen gewünschten E-Modul von 1 bis 12 MPa, bevorzugt zwischen 2 bis 10 MPa und besonders bevorzugt zwischen 2,5 und 9 MPa eingestellt werden.

Herkömmliche Schichtdicken für den Klebstoff liegen zwischen 0,1 bis 0,5 mm, bei offenporigen bzw. saugfähigen Stützkernen tendiert die effektive Klebeschicht gegen 0 mm. Nach einer weiteren vorteilhaften Ausgestaltung der Erfindung kann die Klebeschichtdicke zwischen 0,7 und 1,5 mm und besonders bevorzugt zwischen 0,8 und 1,3 mm liegen. Diese Schichtdicken gewährleisten eine ausreichende Relativbewegung zwischen der Deckschicht einerseits und dem Stützkern andererseits. Außerdem stellen sie eine Dämpfungswirkung der Klebstoffschicht sicher, die den Stützkern gegen schlagartige Belastungen der Deckschicht schützt bzw. sie zumindest dämpft und verteilt. Die Mindestschichtdicke orientiert sich an der Funktion der Klebstoffschicht, eine Kraftverteilung von auf die Deckschicht einwirkenden Kräften zwischen der Deckschicht einerseits und dem Stützkern andererseits zu ermöglichen. Die Maximaldicke der Klebstoffschicht orientiert sich u. a. am Gewicht und am Materialaufwand für den Klebstoff.

Um eine zuverlässige und gleichmäßige Befestigung der Deckschicht auf dem Stützkern zu gewährleisten, wird die Klebstoffschicht regelmäßig vollflächig auf den Stützkern bzw. die Deckschicht aufgebracht. Nach einer vorteilhaften Ausgestaltung der Erfindung kann die Klebstoffschicht zur Befestigung der Deckschicht lediglich teilflächig aufgebracht sein. Um dennoch eine gleichmäßige und in ihren Eigenschaften weitgehend homogene Stützkernverbundplatte zu erhalten, kann die Klebstoffschicht in einem weitgehend regelmäßigen Muster aufgebracht sein, beispielsweise streifenförmig mit zueinander parallelen oder sich kreuzenden Streifen oder punktförmig. Dadurch kann einerseits eine Materialeinsparung erreicht werden, andererseits kann auch mit einem etwas steiferen Klebstoff durch Reduzierung der Flächenbedeckung und damit der Kontaktfläche zwischen Stützkern einerseits und Deckschicht andererseits die Weichheit der Verbindung und damit ihre Schubsteifigkeit beeinflusst bzw. reduziert werden. In Abhängigkeit von den Materialeigenschaften des Klebstoffs kann eine Flächenbedeckung der Klebstoffschicht zwischen beispielsweise 20 bis 80 % der möglichen Kontaktfläche zwischen Stützkern und Deckschicht gewählt werden.

Spröde und steife Stützkerne sind besonders empfindlich auf Biegebeanspruchungen. Übersteigt die Beanspruchung ein zulässiges Maß, so bricht der spröde Stützkern. In Verbindung mit mindestens einer Deckschicht, die über einen elastischen Klebstoff an den Stützkern gekoppelt ist, versagt aber die erfindungsgemäße Stützkernverbundplatte mit einem unter einer Biegebeanspruchung gebrochenen Stützkern nicht. Vielmehr können die auftretenden Zug- und Druckkräfte weiterhin von den Deckschichten aufgenommen werden. Lässt die Biegebelastung nach, so kann sich die erfindungsgemäße Stützkernverbundplatte wieder in ihren entspannten Normalzustand zurückverformen. An einer Bruchstelle des Stützkerns kann er auch unter Biegebelastung weiterhin Querkräfte übertragen, weil sich die Bruchkanten des Stützkerns schon bei geringen Relativbewegungen untereinander verzahnen. Nach einer vorteilhaften Ausgestaltung der Erfindung kann der Stützkern orthogonal zu seiner Haupterstreckungsrichtung, nämlich seiner Plattenebene, und vorzugsweise in einem gleichmäßigen Raster segmentiert sein. Seine Segmentierung kann durch eine regelmäßige Anordnung von durchgehenden Schlitzen im Stützkern ausgebildet sein. Alternativ dazu kann ein vorzugsweise gleichmäßiges Raster an Kerben einseitig oder beidseitig am Stützkern aufgebracht sein, die Sollbruchstellen bilden. Unter einer Biegebelastung des Stützkerns bricht er damit nicht wahllos oder zufällig, sondern reißt entlang eines regelmäßigen Musters. Durch ein gleich- oder regelmäßiges Raster wird ein homogenes Verhalten der Platte aufrechterhalten, auch wenn eine erneute Biegebelastung an einer anderen Stelle der Platte auftritt.

Vor allen Dingen kommt dem Kernmaterial auch die Aufgabe der Schalldämmung zu. Dafür ist der offenporige und feinblasige Stützkern aus Blähglas besonders gut geeignet. Nach einer vorteilhaften Ausgestaltung der Erfindung kann zumindest eine der Deckschichten in einem vorzugsweise gleichmäßigen Raster teilflächig durchbrochen sein. Damit bleibt einerseits die Tragfähigkeit der Deckschicht aufrechterhalten, andererseits ist sie für den Luftschall leichter durchgängig, so dass der Luftschall im offenporigen Stützkern leicht absorbiert und nicht an der glatten Deckschicht reflektiert wird.

Gemäß der erfinderischen Stützkernverbundplatte kann sie über eine Deckschicht aus einem Aluminiumblech mit einer Dicke zwischen 0,4 und 0,8 mm, über eine Klebeschicht in einer Dicke von 0,8 bis 1,5 mm und über einen Stützkern aus Blähglas in einer Dicke von 20 bis 30 mm verfügen. Je nach Anforderungen können die einzelnen Schichten der erfinderischen Stützkernverbundplatte variiert werden. In dem angegebenen Bereich jedoch ergeben sich optimale Eigenschaften der erfinderischen Stützkernverbundplatte hinsichtlich Schubfestigkeit, Schubsteifigkeit, Haftfestigkeit, Brandschutz und Schalldämmung.

Das Prinzip der Erfindung wird im Folgenden anhand einer Zeichnung und einer Gegenüberstellung mit dem Stand der Technik beispielshalber noch näher erläutert. In der Zeichnung zeigen:
- Figur 1:: eine schematische Teilansicht einer erfindungsgemäßen Stützkernverbundplatte,
- Figur 2:: eine schematische Schnittansicht durch die Stützkernverbundplatte, und
- Figur 3:: eine schematische Schnittansicht einer belasteten Stützkernverbundplatte gemäß Figur 2.

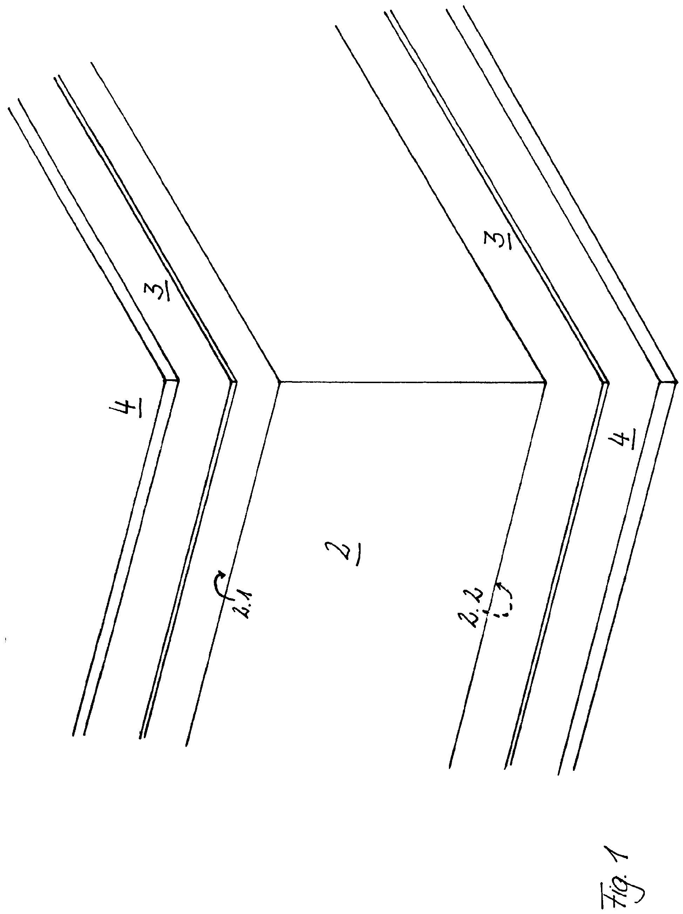

Figur 1 zeigt eine schematische räumliche Ansicht einer erfinderischen Stützkernverbundplatte 1, deren Bestandteile zur Verdeutlichung gegeneinander versetzt dargestellt sind. Sie umfasst einen zentralen Stützkern 2 aus zu einer Platte gesintertem Blähglas. Der Stützkern 2 ist damit sehr leicht und dennoch druckfest, wärmedämmend, alkalibeständig, schallabsorbierend und vor allem nicht brennbar. Darüber hinaus ist er säurebeständig, leicht zu bearbeiten und prinzipiell auch recyclingfähig, indem das Blähglas eingeschmolzen wird. Allerdings ist der Stützkern 2 aus Blähglas auch sehr spröde und damit auf Biegung nur gering belastbar. Der Stützkern 2 hat zwei Plattenseiten, nämlich eine Oberseite 2.1 und eine Unterseite 2.2. Sie erstrecken sich in bzw. parallel zur Plattenebene des Stützkerns 2 und sind jeweils mit einer Klebstoffschicht 3 beschichtet. Sie decken die Oberseite 2.1 und die Unterseite 2.2 des Stützkerns 2 vollständig ab, bestehen aus Silikon und sind daher elastisch. Die Klebstoffschichten 3 wiederum sind jeweils vollflächig bedeckt von einer metallischen Deckschicht 4 aus Aluminium. Auch die Deckschichten 4 sind folglich nicht brennbar, haben eine deutlich höhere Masse als der Stützkern 2 und sind deutlich elastischer als dieser.

Die erfindungsgemäße Stützkernverbundplatte 1 setzt sich also zusammen aus einem quasi schwimmend gelagerten Stützkern 2 zwischen zwei stabilen metallischen Deckschichten 4. Der Stützkern 2 hält die beiden metallischen Deckschichten 4 in einem definierten Abstand zueinander und stützt sie vollflächig in einer Richtung orthogonal auf die Plattenebene ab. Die Klebstoffschicht 3 zwischen den Deckschichten 4 und dem Stützkern 2 bewirkt durch ihre Elastizität eine Körperschallentkopplung zwischen den Deckblechen 4 und dem Stützkern 2. Außerdem ermöglicht sie einen gewissen Spannungsausgleich bei unterschiedlichen Temperaturausdehnungen der Deckschichten 4 einerseits und des Stützkerns 2 andererseits. Die weiche Bettung bzw. Lagerung der Deckschichten 4 auf dem Stützkern 2 führt schließlich zu einer Abfederung von Stoßlasten orthogonal zur Plattenebene und zu einer besseren Lastverteilung, so dass bei einer punktuellen Stoßbelastung auf die Stützkernverbundplatte 1 eine geringere Flächenpressung auf den Stützkern 2 einwirkt. Damit wirken nicht nur die Deckschichten 4, sondern auch die Klebstoffschicht 3 als eine Schutzschicht für den spröden Stützkern 2, der anderenfalls insbesondere bei Stoßbelastungen zumindest lokal beschädigt werden könnte.

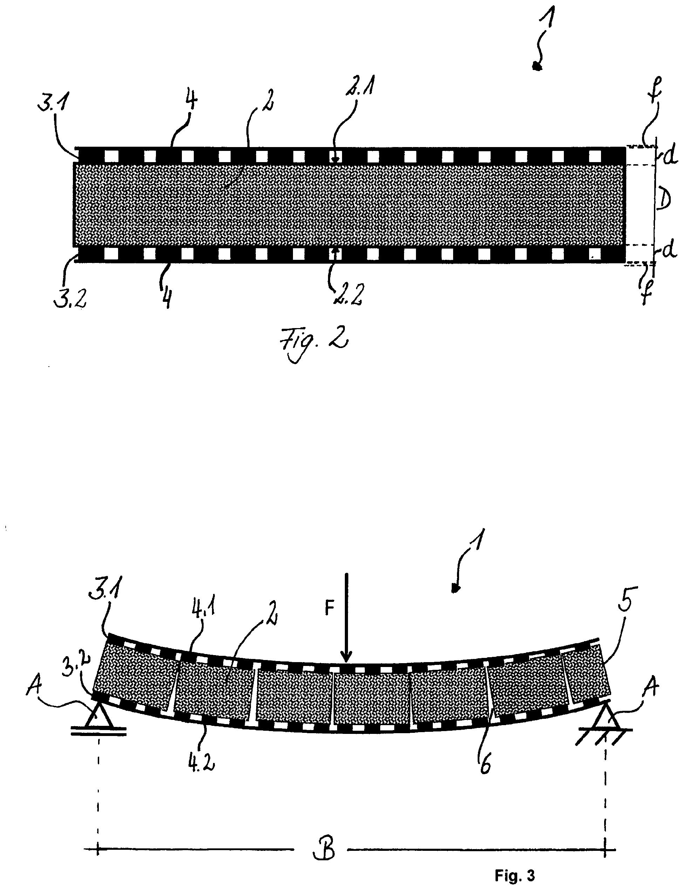

Figur 2 zeigt den prinzipiellen Aufbau der Stützkernverbundplatte 1 in einer schematisierten, nicht maßstäblichen Schnittansicht. Demnach hat der Stützkern 2 eine Dicke D, die größer ist als die Dicke d der Klebstoffschichten 3 und die Dicke f der einander gegenüberliegenden Deckschichten 4. Der Stützkern 2 hat von allen Bestandteilen der Stützkernverbundplatte 1 mit Abstand die größte Dicke D, wie auch aus dem Stand der Technik bekannt. Figur 2 verdeutlicht jedoch, dass die Klebstoffschicht 3 eine mehrfache Schichtdicke d der Dicke f der Deckschichten 4, nämlich in etwa das doppelte Ausmaß, annehmen kann. Abweichend von der Darstellung in Figur 1 zeigt die Figur 2 eine teilflächige Klebstoffschicht, die orthogonal zur Bildebene streifenförmig aufgebracht ist. Die Klebstoffschicht 3 bedeckt demnach etwa 50 % der Oberseite 2.1 bzw. der Unterseite 2.2 des Stützkerns 2.

Figur 3 zeigt eine Stützkernverbundplatte 1 unter einer Biegebelastung infolge einer Einzellast F. Die Stützkernverbundplatte 1 setzt sich aus einem segmentierten Stützkern 2 und einer belastungsseitigen Klebstoffschicht 3.1 bzw. Deckschicht 4.1 und einer gegenüberliegenden Klebstoffschicht 3.2 bzw. Deckschicht 4.2 zusammen. Sie liegt an ihren Seitenrändern auf Auflagern A auf und überspannt deren Abstand B ohne weitere Unterstützung. Der Stützkern 2 ist in einzelne Segmente 5 unterteilt, die durch Schlitze 6 gebildet werden, die sich in regelmäßigen Abständen wiederholen und senkrecht zur Erstreckungsebene der Stützkernverbundplatte 1 verlaufen. Die Einzellast F, die etwa in der Mitte zwischen den beiden Auflagern A auf die belastungsseitige Deckschicht 4.1 der Stützkernverbundplatte 1 wirkt, sorgt für deren Durchbiegung. Bekanntlich treten dadurch in der Deckschicht 4.1 Druckspannungen auf, weil die Stützkernverbundplatte 1 auf der Belastungsseite bzw. der Angriffsseite der Belastung F gestaucht wird. Auf ihrer gegenüberliegenden Seite dagegen erfährt die dortige Deckschicht 4.2 eine Zugbelastung, weil dort die Stützkernverbundplatte 1 gestreckt wird. Sowohl die Druckbelastungen als auch die Zugbelastungen können die metallischen Deckschichten 4.1 und 4.2 übernehmen und abtragen.

Anders dagegen verhält es sich mit dem Stützkern 2, der auf Biegebelastungen empfindlich reagiert und bei einer monolithischen Ausbildung bricht. Da sich der Stützkern 2 jedoch aus den einzelnen Segmenten 5 zusammensetzt, reagiert der Stützkern 2 auf die Biegebelastung mit einem Klaffen der Schlitze 6, um der Zugbelastung an der Unterseite der Stützkernverbundplatte 1 auszuweichen. Die Segmente 5 des Stützkerns 2 dagegen bleiben in ihrer Form erhalten und erfahren keine Beschädigung. Die elastische Klebstoffschicht 3.2 verteilt die auf der Unterseite der Stützkernverbundplatte 1 auftretenden Zugkräfte gleichmäßig aus dem Deckblech 4.2 auf die darüber angeordneten Segmente 5. Auf der Oberseite der Stützkernverbundplatte 1 leitet die Klebstoffschicht 3.1 die Druckkräfte aus der Stauchung der Deckschicht 4.1 ebenfalls gleichmäßig auf die Segmente 5 des Stützkerns 2 weiter.

Tabelle 1 zeigt eine Gegenüberstellung einer erfinderischen Stützkernverbundplatte und einer solchen mit einem Aufbau gemäß Stand der Technik. Beide Platten erreichen dieselben Werte bezüglich des bewerteten Schalldämmmaßes Rw von 30 dB und liegen in derselben Feuerwiderstandsklasse B15 nach IMO-Resolution A.745(18).

Die Stützkernverbundplatte aus dem Stand der Technik verfügt über einen Stützkern aus Mineralwolle in einer Dicke von 23,9 mm. Sie wird von zwei unterschiedlich starken Deckschichten aus Stahl in einer Dicke von 0,6 mm bzw. 0,5 mm bedeckt. Aufgrund der starken Saugfähigkeit des Stützkerns aus Mineralwolle hat der verwendete Klebstoff keine Auswirkungen auf die Dicke der Gesamtplatte von 25 mm. Sie bringt es aufgrund der verwendeten Materialien auf eine Flächenmasse von 12,41 kg/m².

**Tabelle 1: Vergleich technischer Daten der Erfindung mit einer Stützkernverbundplatte nach dem Stand der Technik**

| **Schicht** | **Erfindung:** | | | **Stand der Technik:** | | |
|---|---|---|---|---|---|---|
| | **Platte mit Aluminiumdeckschichten und Blähglaskern** | | | **Platte mit Stahldeckschichten und Mineralwollkern** | | |
| | **Dichte** | **Dicke** | **Flächenmasse** | **Dichte** | **Dicke** | **Flächenmasse** |
| | **[kg/m³]** | **[mm]** | **[kg/m²]** | **[kg/m³]** | **[mm]** | **[kg/m²]** |
| Deckblech | 2700 | 0,40 | 1,08 | 7800 | 0,60 | 4,68 |
| Klebstoff | 1350 | 0,85 | 0,34 | 1400 | - | 0,12 |
| Stützkern | 270 | 24,50 | 6,62 | 150 | 23,90 | 3,59 |
| Klebstoff | 1350 | 0,85 | 0,34 | 1400 | - | 0,12 |
| Deckblech | 2700 | 0,40 | 1,08 | 7800 | 0,50 | 3,90 |
| **Summe** | | **27,50** | **9,46** | | **25,00** | **12,41** |
| | | | | | | |
| Bewertetes Schalldämmmaß Rw | 30 dB | | | 30 dB | | |
| | | | | | | |
| Feuerwiderstandsklasse: IMO FTPC Teil 3 [IMO-Resolution A.754 (18)] | B15 | | | B15 | | |
| | | | | | | |
| Schubfestigkeit | 0,15 MPa | | | 0,05 MPa | | |
| | | | | | | |
| Schubmodul | 11,0 MPa | | | 1,5 MPa | | |
| | | | | | | |
| Haftfestigkeit | 0,08 MPa | | | 0,06 MPa | | |

Die erfinderische Stützkernverbundplatte dagegen basiert auf einem Stützkern aus Blähglas in einer Dicke von 24,5 mm. Er ist damit vor allem wegen seiner höheren Dichte in etwa doppelt so schwer wie der Stützkern gemäß Stand der Technik. Die erfindungsgemäße Klebstoffschicht hat eine erhebliche Schichtdicke von 0,85 mm. Der erfinderische Aufbau sieht jedoch Deckbleche mit einer erheblich geringeren Dichte als im Stand der Technik vor, nämlich mit einer Dichte von nur 2700 kg/m³.

Außerdem können die Deckschichten mit einer Dicke von 0,4 mm noch dünner ausgebildet werden als diejenigen des Stands der Technik. Insgesamt ergibt sich damit eine Flächenmasse der erfinderischen Stützkernverbundplatte von 9,46 kg/m² gegenüber derjenigen von 12,41 kg/m² der bekannten Stützkernverbundplatte. Damit bietet die erfinderische Stützkernverbundplatte einen erheblichen Gewichtsvorteil gegenüber dem Stand der Technik von etwa 28 % Gewichtseinsparung. Trotz des geringen Gewichts bieten sich deutlich bessere mechanische Eigenschaften, die sich bei der Schubfestigkeit um den Faktor 3 und beim Schubmodul um den Faktor 7 unterscheiden. Die Haftfestigkeiten der Deckschichten liegen in etwa gleich auf.

Ergänzend zu den Angaben gemäß Tabelle 1 sei zur Dimensionierung der erfinderischen Stützkernverbundplatte ergänzt, dass das Aluminiumblech eine Dicke in einem Bereich zwischen 0,4 und 0,8 mm und damit eine Dicke weitgehend wie Deckschichten im Stand der Technik aufweisen kann. Die Klebstoffschicht jedoch kann eine Dicke zwischen 0,8 und 1,5 mm betragen, wohingegen sie im Stand der Technik regelmäßig zwischen 0,1 bis etwa 0,5 mm liegt. Bei offenporigen und saugfähigen Materialen der Stützkerne liegt die tatsächliche Klebeschicht regelmäßig sogar bei nicht messbaren 0 mm. Die Flächenbedeckung der erfinderischen Klebstoffschicht kann beispielsweise 30 % betragen, indem die Klebstoffschicht in regelmäßig beabstandeten Streifen aufgetragen ist.

Da es sich bei den vorhergehenden, detailliert beschriebenen Stützkernverbundplatten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Deckschichten in anderer Form als in der hier beschriebenen folgen, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste:

- 1: Stützkernverbundplatte
- 2: Stützkern
- 2.1: Oberseite
- 2.2: Unterseite
- 3: Klebstoffschicht
- 3.1: oberseitige Klebstoffschicht
- 3.2: unterseitige Klebstoffschicht
- 4: Deckschicht
- 4.1: oberseitige Deckschicht
- 4.2: unterseitige Deckschicht
- 5: Segment
- 6: Schlitz

- A: Auflager
- B: Abstand der Auflager
- D: Dicke des Stützkerns
- F: Einzellast

- d: Dicke der Klebstoffschichten
- f: Dicke der Deckschichten

## Patentansprüche

1. Stützkernverbundplatte (1) für Innenausbauten, insbesondere für Wasserfahrzeuge,
- mit einem Stützkern (2) aus Blähglas,
- mit zumindest einer Deckschicht (4; 4.1; 4.2), die den Stützkern (2) auf einer Seite (2.1; 2.2) weitgehend vollflächig bedeckt,
- mit einem elastischen Klebstoff (3; 3.1; 3.2), der die Deckschicht (4; 4.1; 4.2) auf dem Stützkern (2) befestigt, wobei der Klebstoff (3; 3.1; 3.2) eine Shore-(A)-Härte zwischen 30 bis 80 aufweist, **dadurch gekennzeichnet, dass** die Deckschicht (4; 4.1; 4.2) eine Dicke zwischen 0,4 und 0,8 mm aufweist, dass der Stützkern (2) eine Dicke zwischen 20 und 30 mm aufweist und die Klebstoffschicht (3; 3.1; 3.2) eine Dicke zwischen 0,7 und 1,5 mm aufweist.

2. Stützkernverbundplatte nach Anspruch 1, **gekennzeichnet durch** eine metallische Deckschicht (4; 4.1; 4.2).

3. Stützkernverbundplatte nach einem der obigen Ansprüche, **gekennzeichnet durch** einen Klebstoff (3; 3.1; 3.2) der Shore-(A)-Härte 45 bis 70, vorzugsweise zwischen 50 und 60.

4. Stützkernverbundplatte nach einem der obigen Ansprüche, **gekennzeichnet durch** Silikon als Klebstoff (3; 3.1; 3.2).

5. Stützkernverbundplatte nach einem der obigen Ansprüche, **gekennzeichnet durch** eine Schichtdicke des Klebstoffs (3; 3.1; 3.2) von 0,8 bis 1,3 mm.

6. Stützkernverbundplatte nach einem der obigen Ansprüche, **dadurch gekennzeichnet, dass** die Klebstoffschicht (3; 3.1; 3.2) zur Befestigung einer Deckschicht (4.1; 4.2) teilflächig aufgebracht ist.

7. Stützkernverbundplatte nach einem der obigen Ansprüche, **dadurch gekennzeichnet, dass** der Stützkern (2) orthogonal zu seiner Haupterstreckungsrichtung segmentiert ist.

8. Stützkernverbundplatte nach einem der obigen Ansprüchen, **dadurch gekennzeichnet, dass** ein Raster an Kerben einseitig oder beidseitig am Stützkern aufgebracht ist, die Sollbruchstellen bilden.

9. Stützkernverbundplatte nach einem der obigen Ansprüche, **dadurch gekennzeichnet, dass** zumindest eine der Deckschichten durchbrochen ist.

## Claims

1. Support core composite panel (1) for interior fittings, in particular for watercraft,
- with a support core (2) of expanded glass,
- with at least one cover layer (4; 4.1; 4.2) which covers the support core (2) on one side (2.1; 2.2) substantially over its entire surface,
- with a resilient adhesive (3; 3.1; 3.2) which fixes the cover layer (4; 4.1; 4.2) on the support core (2), the adhesive (3; 3.1; 3.2) having a Shore (A) hardness of between 30 and 80, **characterised in that** the cover layer (4; 4.1; 4.2) has a thickness between 0.4 and 0.8 mm, that the support core (2) has a thickness between 20 and 30 mm and the adhesive layer (3; 3.1; 3.2) has a thickness between 0.7 and 1.5 mm.

2. Support core composite panel according to claim 1, **characterised by** a metallic cover layer (4; 4.1; 4.2).

3. Support core composite panel according to one of the above claims, **characterised by** an adhesive (3; 3.1; 3.2) of a Shore (A) hardness of 45 to 70, preferably between 50 and 60.

4. Support core composite panel according to one of the above claims, **characterised by** silicone as adhesive (3; 3.1; 3.2).

5. Support core composite panel according to one of the above claims, **characterised by** a layer thickness of the adhesive (3; 3.1; 3.2) of 0.8 to 1.3 mm.

6. Support core composite panel according to one of the above claims, **characterised in that** the adhesive layer (3; 3.1; 3.2) is applied over part of the surface for fixing a cover layer (4.1; 4.2).

7. Support core composite panel according to one of the above claims, **characterised in that** the support core (2) is segmented orthogonally to its main direction of extension.

8. Support core composite panel according to one of the above claims, **characterised in that** a grid of notches is applied to one or both sides of the support core, which notches form predetermined breaking points.

9. Support core composite panel according to one of the above claims, **characterised in that** at least one of the cover layers is perforated.

## Revendications

1. Panneau composite à noyau de support (1) pour aménagements intérieurs, notamment pour véhicules aquatiques,
- comprenant un noyau de support (2) en verre expansé,
- comprenant au moins une couche de recouvrement (4 ; 4.1 ; 4.2), qui recouvre essentiellement entièrement le noyau de support (2) sur un côté (2.1 ; 2.2),
- comprenant un adhésif élastique (3 ; 3.1 ; 3.2), qui fixe la couche de recouvrement (4 ; 4.1 ; 4.2) sur le noyau de support (2), l'adhésif (3 ; 3.1 ; 3.2) présentant une dureté Shore (A) comprise entre 30 et 80, **caractérisé en ce que** la couche de recouvrement (4 ; 4.1 ; 4.2) présente une épaisseur comprise entre 0,4 et 0,8 mm, **en ce que** le noyau de support (2) présente une épaisseur comprise entre 20 et 30 mm, et la couche d'adhésif (3 ; 3.1 ; 3.2) présente une épaisseur comprise entre 0,7 et 1,5 mm.

2. Panneau composite à noyau de support selon la revendication 1, **caractérisé par** une couche de recouvrement métallique (4 ; 4.1 ; 4.2).

3. Panneau composite à noyau de support selon l'une quelconque des revendications précédentes, **caractérisé par** un adhésif (3 ; 3.1 ; 3.2) ayant une dureté Shore (A) de 45 à 70, de préférence comprise entre 50 et 60.

4. Panneau composite à noyau de support selon l'une quelconque des revendications précédentes, **caractérisé par** de la silicone en tant qu'adhésif (3 ; 3.1 ; 3.2).

5. Panneau composite à noyau de support selon l'une quelconque des revendications précédentes, **caractérisé par** une épaisseur de couche de l'adhésif (3 ; 3.1 ; 3.2) de 0,8 à 1,3 mm.

6. Panneau composite à noyau de support selon l'une quelconque des revendications précédentes, **caractérisé en ce que** la couche d'adhésif (3 ; 3.1 ; 3.2) pour la fixation d'une couche de recouvrement (4.1 ; 4.2) est appliquée sur une partie de la surface.

7. Panneau composite à noyau de support selon l'une quelconque des revendications précédentes, **caractérisé en ce que** le noyau de support (2) est segmenté perpendiculairement à sa direction d'extension principale.

8. Panneau composite à noyau de support selon l'une quelconque des revendications précédentes, **caractérisé en ce qu'**une trame d'encoches, qui forment des positions de rupture, est disposée sur un côté ou sur les deux côtés du noyau de support.

9. Panneau composite à noyau de support selon l'une quelconque des revendications précédentes, **caractérisé en ce qu'**au moins une des couches de recouvrement est interrompue.
